# EUROPEAN PATENT APPLICATION

(11) **EP 4 474 197 A1**
(43) Date of publication of application: **11.12.2024**
(21) Application number: 23770998.5
(22) Date of filing: 28.02.2023
(51) Int. Cl.: B60L 7/10, B60L 58/12, B60L 1/00, B60L 15/20, B60L 50/10, B60W 20/14, B60W 10/26, B60W 10/08, F16H 57/02, E02F 9/22

(54) **REGENERATIVE BRAKING POWER DISTRIBUTION SYSTEM FOR CONSTRUCTION VEHICLE**

(30) Priority: 14.03.2022 KR 20220031599
(71) Applicant: HD Hyundai Infracore Co., Ltd., Incheon 22502 (KR)
(72) Inventor: SEO, Hyun Jae, Ansan-si, Gyeonggi-do 15484 (KR); PARK, Jin Hyun, Suwon-si, Gyeonggi-do 16295 (KR)
(74) Representative: Isarpatent
(86) International application number: PCT/KR2023/002797
(87) International publication number: WO 2023/177118

(57) **Abstract**

Disclosed is a regenerative braking power distribution system for a construction machinery vehicle, including: a battery configured to store power; an excavation module configured to control operations of an excavation unit of the construction machinery vehicle; a movement module configured to control operations of a movement unit of the construction machinery vehicle; and a power distributor connected to the battery, the excavation module, and the movement module, and configured to distribute power stored in the battery to the excavation module or the movement module, wherein the power distributor distributes regenerative braking power generated in the movement module to the excavation module based on state of charge (SOC) conditions of the battery so that the distributed regenerative braking power can be consumed in the excavation module. Accordingly, it is expected that the regenerative braking is maintained when driving downhill, the battery is prevented from overcharging, driving fatigue of a driver is decreased, and the driver is safely protected.

## Description

### [Technical Field]

The disclosure relates to a regenerative braking power distribution system for a construction machinery vehicle, and more particularly to a regenerative braking power distribution system for a construction machinery vehicle, which operates a hydraulic pump to consume regenerative braking power according to state-of-charge (SOC) conditions of a battery, thereby maintaining regenerative braking and protecting a driver.

### [Background Art]

With recent environmental issues and various environmental regulations, an electric vehicle based on only a secondary battery, and a hybrid construction machinery vehicle based on combination of an engine and the secondary battery are preferred and increasing rather than a conventional construction machinery vehicle, such as a wheel loader and a wheel excavator, mounted with only an internal combustion engine.

Here, the hybrid construction machinery vehicle performs regenerative braking when applying a brake to stop or when automatically applying the brake upon driving downhill. Regenerative braking power generated at this time is stored in a battery.

Typically, when the battery is overcharged, a fire may break out due to battery deterioration. Therefore, there are no issues when the battery's state of charge (SOC) is 90% or less. However, downhill driving causes the battery to be charged with the regenerative braking power, and thus the battery's SOC continues to rise.

When the battery reaches an SOC limit, the regenerative braking may not work suddenly to prevent the battery from overcharging.

At this timing, a driver has to step on the brake in person. If the timing is missed, it may lead to an accident. When driving downhill for a long time, a driver may become more fatigued because s/he has to apply the brake in person.

Accordingly, in particular, when driving downhill, it is necessary to consume the regenerative braking power to ensure normal work of braking.

### [Disclosure]

### [Technical Problem]

The disclosure has been conceived to solve the foregoing problems of the related art, and an aspect of the disclosure is to provide a regenerative braking power distribution system for a construction machinery vehicle, which operates a hydraulic pump to consume regenerative braking power according to state-of-charge (SOC) conditions of a battery, thereby maintaining regenerative braking and protecting a driver.

### [Technical Solution]

One aspect of the disclosure relates to a regenerative braking power distribution system for a construction machinery vehicle, including: a battery configured to store power; an excavation module configured to control operations of an excavation unit of the construction machinery vehicle; a movement module configured to control operations of a movement unit of the construction machinery vehicle; and a power distributor connected to the battery, the excavation module, and the movement module, and configured to distribute power stored in the battery to the excavation module or the movement module, wherein the power distributor distributes regenerative braking power generated in the movement module to the excavation module based on state of charge (SOC) conditions of the battery so that the distributed regenerative braking power can be consumed in the excavation module.

Further, according to an embodiment, the excavation module may include: a first electric motor electrically connected to the power distributor; and a hydraulic pump connected to the first electric motor and configured to discharge hydraulic oil.

Further, according to an embodiment, the regenerative braking power distribution system may further include: a valve placed on a line where the hydraulic oil is discharged from the hydraulic pump and configured to control flow of the hydraulic oil; and a hydraulic oil tank connected to the valve and the hydraulic pump and configured to store the hydraulic oil, wherein the hydraulic pump, the valve, and the hydraulic oil tank forms a closed circulation loop where the hydraulic oil circulates.

Further, according to an embodiment, the regenerative braking power distribution system may further include a controller configured to control the hydraulic pump, wherein the controller controls a discharge amount of the hydraulic pump so that power can be consumed in the excavation module.

Further, according to an embodiment, the controller may control the discharge amount of the hydraulic pump to become zero upon the battery having the SOC conditions lower than a certain level.

Further, according to an embodiment, the power distributor may distribute the regenerative braking power generated in the movement module to the excavation module based on speed of the vehicle so that the distributed regenerative braking power can be consumed in the excavation module.

Further, according to an embodiment, the movement module may include a second electric motor connected to the power distributor, and power generated by regenerative braking of the second electric motor may be transmitted to the power distributor and the power distributor may distribute the power to the battery or the excavation module based on the construction machinery vehicle being driving downhill.

Further, according to an embodiment, the power distributor may distribute some or all of the regenerative braking power generated in the second electric motor to the battery and the excavation module based on the SOC conditions of the battery.

Further, according to an embodiment, the regenerative braking power distributed to the excavation module may be consumed in operating the hydraulic pump, and the hydraulic oil may circulate along the closed circulation loop formed by the hydraulic pump, the valve, and the hydraulic oil tank based on the operations of the hydraulic pump.

Further, according to an embodiment, the movement module may include: a second inverter connected to the power distributor; a second electric motor connected to the second inverter; and a gear box connecting the second electric motor and the movement unit and configured to drive a wheel based on the operations of the second electric motor.

Further, according to an embodiment, the regenerative braking power distribution system may further include: a third inverter connected to the power distributor; a generator connected to the third inverter; and an engine connected to the generator, wherein the generator generates power based on operations of the engine and transmits the generated power to the power distributor.

Further, according to an embodiment, the regenerative braking power distribution system may further include: a brake configured to make the vehicle brake; and a brake controller configured to electronically control the brake, wherein the brake controller increases a braking ratio of the brake based on the battery having the SOC conditions higher than a certain level or based on the vehicle having speed higher than a certain level.

### [Advantageous Effects]

According to the disclosure, regenerative braking power is consumed by operating a hydraulic pump according to state-of-charge (SOC) conditions of a battery, thereby maintaining regenerative braking. Accordingly, the regenerative braking is maintained when driving downhill, the battery is prevented from overcharging, and driving fatigue caused when a driver has to step on a brake in person is decreased to prevent accident.

In other words, the regenerative braking, which is turned off to prevent the battery from overcharging, works even when driving downhill, and thus the timing and number of times a driver intervenes in braking are decreased, thereby ultimately decreasing the driver's driving fatigue. Further, an accident that may occur when braking does not work is prevented.

In addition, a hydraulic pump is used to consume the regenerative braking power, and thus there is no need to add a separate power consumption load system to a construction machinery vehicle, thereby lowering the manufacturing costs of the construction machinery vehicle and increasing productivity.

### [Description of Drawings]

FIG. 1 is a diagram showing the overall configuration of a regenerative braking power distribution system for a construction machinery vehicle according to the disclosure.
FIG. 2 is a diagram showing that a regenerative braking power distribution system for a construction machinery vehicle according to the disclosure supplies power from a battery to a movement module when driving uphill.
FIG. 3 is a diagram showing that a regenerative braking power distribution system for a construction machinery vehicle according to the disclosure stores regenerative braking power from a movement module to a battery when driving downhill.
FIG. 4 is a diagram showing that a regenerative braking power distribution system for a construction machinery vehicle according to the disclosure distributes some of a regenerative braking power to an excavation module according to SOC conditions of a battery so as to be consumed in operating a hydraulic pump when driving downhill.

### [Mode for Invention]

Advantages and features of the disclosure and methods for accomplishing the same will be more clearly understood from exemplary embodiments described below with reference to the accompanying drawings. However, the disclosure is not limited to the following exemplary embodiments but may be implemented in various different forms. The exemplary embodiments are provided only to complete disclosure of the disclosure and to fully provide a person having ordinary skill in the art to which the disclosure pertains with the category of the invention and the present invention will be defined by the appended claims.

The shapes, sizes, ratios, angles, numbers and the like illustrated in the accompanying drawings for describing the exemplary embodiments of the disclosure are merely examples and the disclosure is not limited thereto. Like reference numerals generally denote like elements throughout the present specification. And, in the following description, a detailed explanation of known related technologies may be omitted to avoid unnecessarily obscuring the subject matter of the present disclosure. The terms such as "including", "having", "comprising" and "consist of" used herein are generally intended to allow other components to be added unless the terms are used with the term "only". Any references to singular may include plural unless expressly stated otherwise.

Components are interpreted to include an ordinary error range or an ordinary tolerance range even if not expressly stated.

When the position relation between two parts is described using the terms such as "on", "above", "below" and "next", one or more parts may be positioned between the two parts unless the terms are used with the term "immediately" or "directly".

Although the terms "first", "second" and the like are used for describing various components, these components are not confined by these terms. These terms are merely used for distinguishing one component from the other components. Therefore, a first component to be mentioned below may be a second component in a technical concept of the present disclosure.

Throughout the whole specification, the same reference numerals denote the same elements.

Since size and thickness of each component illustrated in the drawings are represented for convenience in explanation, the disclosure is not necessarily limited to the illustrated size and thickness of each component.

The features of various embodiments of the disclosure can be partially or entirely bonded to or combined with each other and can be interlocked and operated in technically various ways as can be fully understood by a person having ordinary skill in the art, and the embodiments can be carried out independently of or in association with each other.

Below, embodiments of the disclosure will be described in detail with reference to the accompanying drawings. Several embodiments set forth herein may be applied overlappingly as long as they do not conflict with each other.

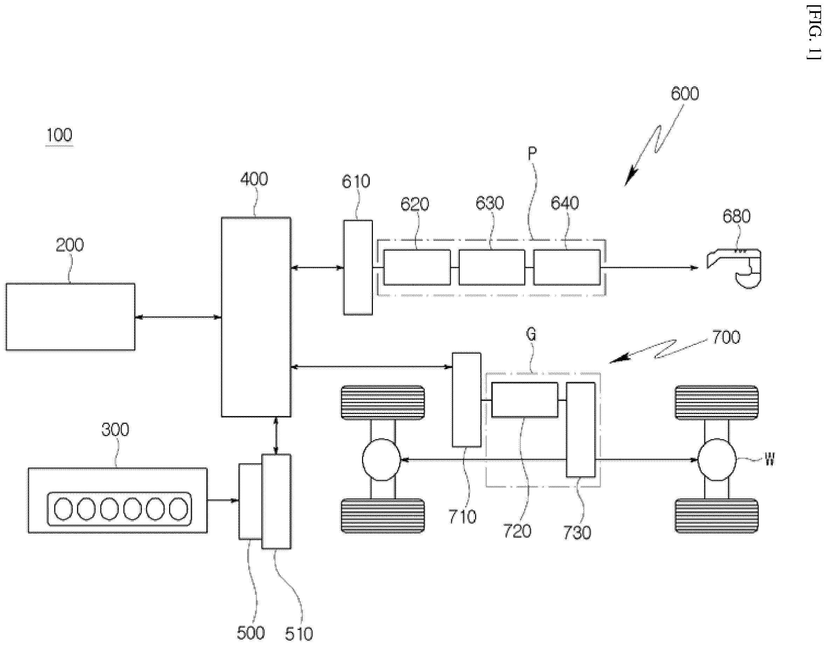

Referring to FIGS. 1 to 4, a regenerative braking power distribution system 100 for a construction machinery vehicle according to an embodiment of the disclosure may include a battery 200, an engine 300, a generator 500, a power distributor 400, an excavation module 600, and a movement module 700.

The battery 200 may include a secondary battery that stores power. According to an embodiment, the battery 200 may be, but not limited to, a lithium (Li)-ion battery.

The engine 300 may include an internal combustion engine. According to an embodiment, the engine 300 may be, but not limited to, a diesel engine 300.

The generator 500 may be connected to the engine 300, and generate power by converting physical energy generated by the engine 300 into electrical energy.

The power distributor 400 may be electrically connected to the battery 200, the engine 300, the excavation module 600, and the movement module 700.

In this case, the power distributor 400 and the generator 500 may be connected by a third inverter 510, and power generated by the generator 500 may be converted in form (direct current or alternating current) and then supplied to the power distributor 400. The power supplied to the power distributor 400 may be supplied to and stored in the battery 200.

Further, the power distributor 400 may distribute the power stored in the battery 200 to the excavation module 600 or the movement module 700.

While the construction machinery vehicle such as a wheel loader and a wheel excavator moves, the power distributor 400 may supply power from the battery 200 to the movement module 700. When the construction machinery vehicle works, the power distributor 400 may supply power from the battery 200 to the excavation module 600.

Next, the excavation module 600 may control an excavation unit 680 of the construction machinery vehicle to operate. The excavation module 600 may include a first inverter 610, a pump unit P, a valve 650, a hydraulic oil tank 660, and a cylinder 670.

The first inverter 610 may be electrically connected to the power distributor 400, and convert and transmit power supplied from the power distributor 400 to the pump unit P.

The pump unit P may be electrically connected to the first inverter 610 and drive the cylinder 670. The pump unit P may include a first electric motor 620, a pump driver 630, and a hydraulic pump 640. The first electric motor 620 may be electrically connected to the first inverter 610 and driven by receiving the converted power.

The pump driver 630 may be arranged to connect the first electric motor 620 and the hydraulic pump 640, and convert and transmit the rotation speed of the first electric motor 620 to the hydraulic pump 640 so as to adjust the rotational speed of the hydraulic pump 640.

The hydraulic pump 640 may circulate the hydraulic oil based on the rotation speed controlled by the pump driver 630, thereby driving the cylinder 670.

Here, the valve 650 and the hydraulic oil tank 660 may be connected between the hydraulic pump 640 and the cylinder 670.

The valve 650 may be placed on a line connecting the hydraulic pump 640 and the cylinder 670, which constitute the pump unit P, and may control the flow of the hydraulic oil.

The hydraulic oil tank 660 may be connected to the valve 650 and the hydraulic pump 640, which constitutes the pump unit P, and may store the hydraulic oil.

In addition, the hydraulic pump 640, the valve 650 and the hydraulic oil tank 660 may form a closed circulation loop H in which the hydraulic oil circulates.

Next, the movement module 700 may control the operation of a movement unit G of the construction machinery vehicle. The movement module 700 may include a second inverter 710 and the movement unit G, and the movement unit G may include a second electric motor 720 and a gear box 730.

The second inverter 710 may be electrically connected to the power distributor 400, and may convert and supply the power supplied from the power distributor 400 to the second electric motor 720.

The second electric motor 720 may be electrically connected to the second inverter 710 and driven by receiving power from the second inverter 710.

The gear box 730 connects the second electric motor 720 and the movement unit G, and may drive wheels W according to the operation of the second electric motor 720.

Meanwhile, according to an embodiment, a controller may be further provided to control the hydraulic pump 640. The controller may control the discharge amount of the hydraulic pump 640 so that power can be consumed in the excavation module 600.

In other words, when the state of charge (SOC) of the battery 200 are higher than or equal to a certain level, the controller may increase the discharge amount of the hydraulic pump 640 so that power can be consumed in the excavation module 600. Therefore, a user can be free from unnecessary use of brakes or feelings of discomfort in using brakes.

On the other hand, when the SOC of the battery 200 are lower than the certain level, the controller may control the discharge amount of the hydraulic pump 640 to become zero. Furthermore, the controller may set the discharge amount of the hydraulic pump 640 to zero when regenerative power is not consumed. In this case, the rotation speed of the motor usually becomes zero.

According to the speed of a vehicle, the power distributor 400 may distribute the regenerative braking power generated by the movement module 700 to the excavation module 600 so that the regenerative braking power can be consumed in the excavation module 600.

In other words, not only the foregoing SOC conditions of the battery 200 but also the speed conditions of the vehicle may be taken into account so that the regenerative power can be distributed to and consumed in the excavation module 600.

For example, when the regenerative power generated by the movement module 700 is set to be distributed to the excavation module 600 under the condition that the SOC of the battery 200 is higher than or equal to 80%, the speed conditions of the vehicle may be further taken into account together. Therefore, when the speed of the vehicle is faster than a predetermined speed, the regenerative power may be distributed from the movement module 700 to the excavation module 600 under a lower SOC condition, e.g., under a condition that the SOC is higher than or equal to 70%.

In addition, when the SOC of the battery 200 is higher than or equal to a certain level or when the speed of the vehicle is higher than or equal to a certain level, there is a limit to use the regenerative power in braking, thereby requiring a driver's intervention in the braking.

When the driver intervenes in the braking, a brake braking ratio may be controlled to increase compared to a brake pedal ration required in a normal situation. This reduces the driver's fatigue and prevents the speed of the vehicle from increasing suddenly.

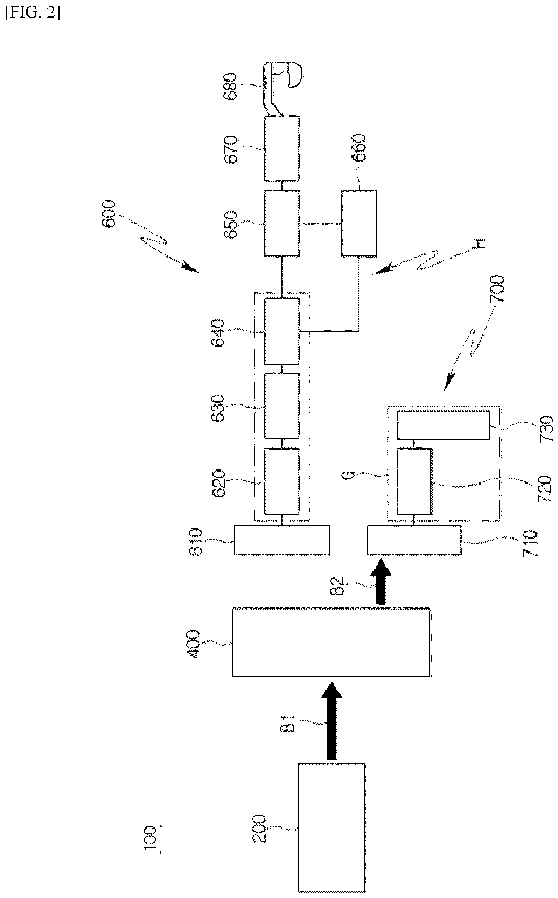

Meanwhile, FIG. 2 shows power flow upon uphill driving in the regenerative braking power distribution system 100 for the construction machinery vehicle according to the disclosure.

Referring to FIG. 2, when the construction machinery vehicle is driving uphill, the power distributor 400 may supply power from the battery 200 to the movement module 700. The supplied power is converted by the second inverter 710 into the form of power for driving the second electric motor 720. As the second electric motor 720 rotates, the gear box 730 transmits rotational force the wheels W, thereby driving the construction machinery vehicle.

In the power flows B1 and B2 shown in FIG. 2, the power is focused on the movement for the uphill driving. Because excavation work is not performed while the construction machinery vehicle is driving uphill, no power is supplied to the excavation module 600.

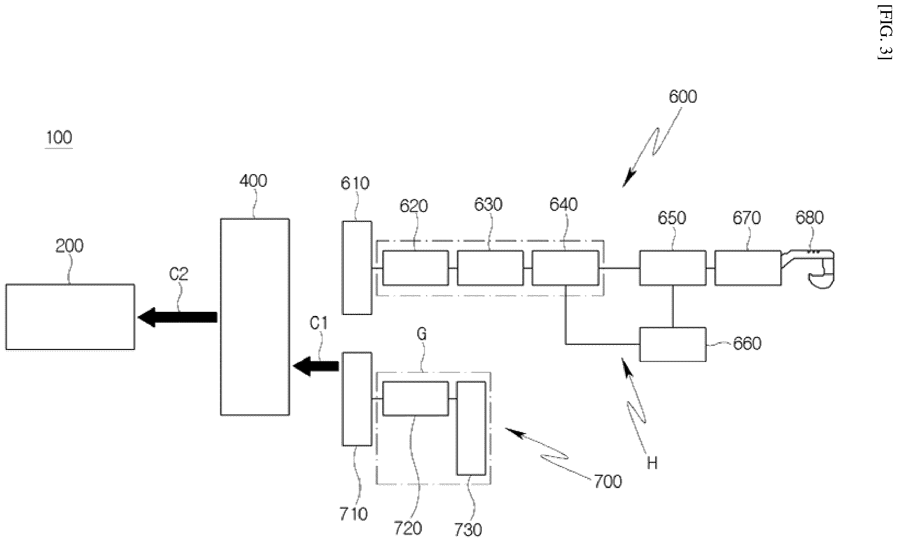

Next, FIG. 3 shows the power flow upon downhill driving in the regenerative braking power distribution system 100 for the construction machinery vehicle according to the disclosure.

Referring to FIG. 3, when the construction machinery vehicle is driving downhill, the power generated by the regenerative braking of the second electric motor 720 in the movement module 700 may be transmitted to the power distributor 400. In addition, the power distributor 400 may distribute the power to the battery 200 to charge the battery 200.

The power flows C1 and C2 shown in FIG. 3 is under the condition that the SOC of the battery 200 is less than 80%.

Under the condition that the SOC of the battery 200 is less than 80%, the battery 200 is not in an overcharged state but has room for charging. Therefore, the power distributor 400 transmits all the power generated by the regenerative braking of the second electric motor 720 to the battery 200.

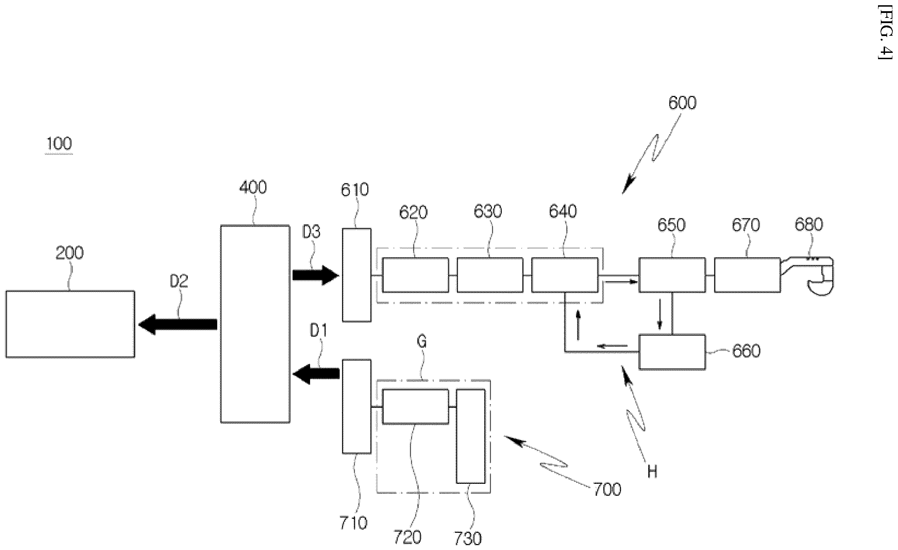

Next, FIG. 4 shows the flow of the regenerative braking power according to the SOC conditions of the battery 200 when driving downhill in the regenerative braking power distribution system 100 for the construction machinery vehicle according to the disclosure.

Referring to FIG. 4, when the construction machinery vehicle is driving downhill under the condition that the SOC of the battery 200 is higher than or equal to 80%, the power generated by the regenerative braking of the second electric motor 720 in the movement module 700 is transmitted to the power distributor 400, and the power distributor 400 distributes the power to the battery 200 or the excavation module 600 according to the SOC conditions of the battery 200.

Specifically, when the SOC of the battery 200 is 80% or more and less than 90%, the power distributor 400 may distribute the regenerative braking power generated by the second electric motor 720 at a predetermined ratio according to predetermined ranges, and supply the distributed power to the battery 200 and the excavation module 600.

According to an embodiment of the disclosure, the predetermined ranges may be divided into a range between 80% or more and less than 83%, a range between 83% or more and less than 85%, and a range between 85% or more and less than 90%.

The power distributor 400 may distribute the regenerative braking power according to the ranges and transmit the distributed power to the battery 200 and the excavation module 600.

According to an embodiment of the disclosure, the power distributor 400 may be set to distribute 100% of the regenerative braking power to the battery 200 under the condition that the SOC of the battery 200 is less than 80%. Further, 75 to 85%, preferably, about 80% of the regenerative braking power generated by the second electric motor 720 may be distributed to the battery 200 under the condition that the SOC of the battery 200 is less than 80% or more and less than 83%.

In this case, 15 to 25%, preferably, about 20% of the regenerative braking power generated by the second electric motor 720 may be distributed to the excavation module 600.

In other words, the power may be distributed to the battery 200 and the excavation module 600 at a ratio of approximately 8:2.

Likewise, 45 to 55%, preferably, about 50% of the regenerative braking power, compared to the regenerative braking generated by the second electric motor 720, may be distributed to the battery 200 under the condition that the SOC of the battery 200 is in a range of 83% or more and less than 85%.

In this case, 45 to 55%, preferably, about 50% of the regenerative braking power generated by the second electric motor 720 may be distributed to the excavation module 600.

In other words, the power may be distributed to the battery 200 and the excavation module 600 at a ratio of approximately 5:5.

Likewise, 25 to 35%, preferably, about 30% of the regenerative braking power, compared to the regenerative braking generated by the second electric motor 720, may be distributed to the battery 200 under the condition that the SOC of the battery 200 is in a range of 85% or more and less than 90%.

In this case, 65 to 75%, preferably, about 70% of the regenerative braking power generated by the second electric motor 720 may be distributed to the excavation module 600.

In other words, the power may be distributed to the battery 200 and the excavation module 600 at a ratio of approximately 3:7.

The power distributed to the excavation module 600 according to the foregoing predetermined ratio is consumed in operating the first electric motor 620 and ultimately the hydraulic pump 640. According to the operations of the hydraulic pump 640, the hydraulic oil flows.

In this case, the valve 650 is closed not to supply the hydraulic oil to the cylinder 670, thereby preventing the excavation unit 680 from operating. The valve 650 opens the line connected to the hydraulic oil tank 660, and the hydraulic oil tank 660 is connected to the hydraulic pump 640, so that the hydraulic oil can continue to circulate in a hydraulic oil closed circulation loop H as shown in FIG. 4.

In this way, the regenerative braking power is consumed in driving the hydraulic pump 640, thereby preventing the battery 200 from overcharging, and maintaining the regenerative braking of the second electric motor 720. Ultimately, the braking may work continuously when driving downhill.

Next, the power distributor 400 may be set to distribute 100% of the regenerative braking power generated by the second electric motor 720 to the excavation module 600 under the condition that the SOC of the battery 200 is 90% or more.

To prevent the battery 200 from overcharging, all the regenerative braking power is consumed in driving the hydraulic pump 640.

Referring to FIG. 4, the regenerative braking power generated by the second electric motor 720 is transmitted to the power distributor 400 through power flows D1, D2 and D3, and the power distributor 400 distributes the regenerative braking power to the battery 200 and the excavation module 600.

In this case, all the power flows D1, D2, and D3 occur under the condition that the SOC of the battery 200 is 80% or more and less than 90%. Under the condition that the SOC of the battery 200 is more than 90%, only the power flows D1 and D3 occur.

Through the foregoing configuration of the system 100 according to the disclosure, the regenerative braking power is consumed in the hydraulic pump 640, thereby preventing the battery 200 from overcharging and making the second electric motor 720 continue to generate the regenerative braking power. This may ensure that the brake works smoothly, in particular, upon driving downhill, thereby reducing driving fatigue caused when a driver has to apply the brake in person, and preventing an accident.

In other words, the regenerative braking, which is turned off to prevent the battery from overcharging, works even when driving downhill, and thus the timing and number of times a driver intervenes in braking are decreased, thereby ultimately decreasing the driver's driving fatigue. Further, an accident that may occur when braking does not work is prevented.

The foregoing descriptions merely show specific embodiments of the regenerative braking power distribution system for the construction machinery vehicle.

Accordingly, it will be easily understood for those skilled in the art that modifications and changes can be made in various forms without departing from the scope of the disclosure defined in the appended claims.

### [Industrial Applicability]

The disclosure relating to a regenerative braking power distribution system for a construction machinery vehicle has industrial applicability.

## Claims

1. A regenerative braking power distribution system for a construction machinery vehicle, comprising:
a battery configured to store power;
an excavation module configured to control operations of an excavation unit of the construction machinery vehicle;
a movement module configured to control operations of a movement unit of the construction machinery vehicle; and
a power distributor connected to the battery, the excavation module, and the movement module, and configured to distribute power stored in the battery to the excavation module or the movement module,
wherein the power distributor distributes regenerative braking power generated in the movement module to the excavation module based on state of charge (SOC) conditions of the battery so that the distributed regenerative braking power can be consumed in the excavation module.

2. The regenerative braking power distribution system of claim 1, wherein the excavation module comprises:
a first electric motor electrically connected to the power distributor; and
a hydraulic pump connected to the first electric motor and configured to discharge hydraulic oil.

3. The regenerative braking power distribution system of claim 2, further comprising:
a valve placed on a line where the hydraulic oil is discharged from the hydraulic pump and configured to control flow of the hydraulic oil; and
a hydraulic oil tank connected to the valve and the hydraulic pump and configured to store the hydraulic oil,
wherein the hydraulic pump, the valve, and the hydraulic oil tank forms a closed circulation loop where the hydraulic oil circulates.

4. The regenerative braking power distribution system of claim 2, further comprising a controller configured to control the hydraulic pump,
wherein the controller controls a discharge amount of the hydraulic pump so that power can be consumed in the excavation module.

5. The regenerative braking power distribution system of claim 4, wherein the controller controls the discharge amount of the hydraulic pump to become zero upon the battery having the SOC conditions lower than a certain level.

6. The regenerative braking power distribution system of claim 1, wherein the power distributor distributes the regenerative braking power generated in the movement module to the excavation module based on speed of the vehicle so that the distributed regenerative braking power can be consumed in the excavation module.

7. The regenerative braking power distribution system of claim 1, wherein
the movement module comprises a second electric motor connected to the power distributor, and
power generated by regenerative braking of the second electric motor is transmitted to the power distributor and the power distributor distributes the power to the battery or the excavation module based on the construction machinery vehicle being driving downhill.

8. The regenerative braking power distribution system of claim 7, wherein the power distributor distributes some or all of the regenerative braking power generated in the second electric motor to the battery and the excavation module based on the SOC conditions of the battery.

9. The regenerative braking power distribution system of claim 7, wherein
the regenerative braking power distributed to the excavation module is consumed in operating the hydraulic pump, and
the hydraulic oil circulates along the closed circulation loop formed by the hydraulic pump, the valve, and the hydraulic oil tank based on the operations of the hydraulic pump.

10. The regenerative braking power distribution system of claim 1, wherein the movement module comprises:
a second inverter connected to the power distributor;
a second electric motor connected to the second inverter; and
a gear box connecting the second electric motor and the movement unit and configured to drive a wheel based on the operations of the second electric motor.

11. The regenerative braking power distribution system of claim 1, further comprising:
a third inverter connected to the power distributor;
a generator connected to the third inverter; and
an engine connected to the generator,
wherein the generator generates power based on operations of the engine and transmits the generated power to the power distributor.

12. The regenerative braking power distribution system of claim 1, further comprising:
a brake configured to make the vehicle brake; and
a brake controller configured to electronically control the brake,
wherein the brake controller increases a braking ratio of the brake based on the battery having the SOC conditions higher than a certain level or based on the vehicle having speed higher than a certain level.
